# EUROPEAN PATENT APPLICATION

(11) **EP 2 466 787 A1**
(43) Date of publication of application: **20.06.2012**
(21) Application number: 10306414.3
(22) Date of filing: 15.12.2010
(51) Int. Cl.: H04L 12/14, H04L 29/08, H04L 29/12

(54) **Dynamic policy-based charging system and method**

(71) Applicant: Alcatel Lucent, 75007 Paris (FR)
(72) Inventor: Saker, Daniel, 91620 Nozay (FR)
(74) Representative: Gabriel, Franck

(57) **Abstract**

A policy-based charging system for charging telecommunication network usage by a user in a telecommunication network architecture comprising a policy and charging enforcement function (PCEF) entity, a policy control and charging rules function (PCRF) entity and an online charging system (OCS), the policy and charging enforcement function (PCEF) entity being coupled to the policy control and charging rules function (PCRF) entity and to the online charging system (OCS), wherein an OCS instance (OCS IN) at the online charging system (OCS) is associated with a user session (SS), and wherein the policy control and charging rules function (PCRF) entity is coupled to the online charging system (OCS) through a direct interface (DI), the direct interface being adapted to transmit information related to a user subscription from the online charging system (OCS) to the policy control and charging rules function (PCRF) entity.

## Description

An aspect of the invention relates to a dynamic policy-based charging system in a telecommunication network infrastructure. The invention further relates to a dynamic policy-based charging method, a computer software product, and entities of a telecommunication network executing the policy-based charging.

Such a method and system find a particular, though non exclusive, application in telecommunication networks, for example 2^{nd}, 3^{rd} and 4^{th} generation network like 2G, 3G, or LTE (Long Term Evolution) networks.

The market's adoption of the mobile devices like the smart-phones and enhanced broadband access capacities for other connected devices and laptops (using Wireless Fidelity WiFi, 3G Universal Serial Bus USB) has contributed to the stimulation of mobile multimedia services usage. Mobile multimedia services expand to data applications such as Voice Over Internet Protocol VoIP, Internet Protocol Television IPTV, Video On Demand VOD, interactive gaming, and social networking, etc.... This results in an explosion of data traffic, a high demand for bandwidth and finally to a congestion in the network which infrastructure is not able to support the corresponding data traffic deluge. The fierce competition between telecommunication operators led them to propose attractive unlimited data plans in postpaid flat fee schemes in order to attract or retain subscribers. However, the telecommunication operators can no longer sustain the massive infrastructure investment necessitated by this situation.

Further, though, subscribers are demanding access to more applications with more bandwidth and a corresponding service delivery executed with the required Quality Of Service QoS, they are not willing to pay more. As a consequence, from the telecommunication operators' perspective, the traditional postpaid offline payment/billing model and past flat fee model have reached their limit.

In order to solve this issue, the telecommunication operators are moving towards a model where they are precisely controlling network usage to reduce network infrastructure investment while securing additional revenue by offering personalized broadband services tailored specifically to the subscriber's preferences and performance requirements. Policy-based charging enables to dynamically control network bandwidth and QoS according to the subscriber's service tier and entitlements. This implies real time interaction between various entities of the telecommunication network such as the Gateway General Packet Radio Service (GPRS) Support Node GGSN, the LTE Packet Gateway PGW, the Deep Packet Inspection DPI, the policy manager, and the subscriber data and charging systems (like the Online Charging System OCS, or the Operations Support System OSS or the Business Support System BSS). In order to implement the policy-based charging, the subscriber data and charging system, for example the Online Charging System OCS must support all the sessions that have been initiated by the various subscribers requesting the services offered by the telecommunication operator. However, the above mentioned entities cannot efficiently support the load generated by the numerous charging related requests involved by the real time charging of the chargeable events created during the sessions.

It is an object of the invention to propose a policy-based charging method or system that overcome the above mentioned drawbacks, and in particular enhance the policy-based charging method or system capability to efficiently support an important number of charging requests.

It is proposed to couple the policy control and charging rules function PCRF entity and the online charging system OCS through a direct interface. The interactions between PCRF and OCS at session establishment and during the on-going session used for policy-based charging are transmitted through this direct interface in a round robin way among a plurality of OCS instances.

According to one aspect, there is provided a policy-based charging system for charging telecommunication network usage by a user in a telecommunication network architecture comprising a policy and charging enforcement function entity, a policy control and charging rules function entity and an online charging system, the policy and charging enforcement function entity being coupled to the policy control and charging rules function entity and to the online charging system, wherein an instance at the online charging system is associated with a user session, and wherein the policy control and charging rules function entity is coupled to the online charging system through a direct interface, the direct interface being adapted to transmit information related to a user subscription from the online charging system to the policy control and charging rules function entity.

The direct interface may be a Diameter protocol based interface or a SOAP protocol based interface.

According to a further aspect, there is provided a policy control and charging rules function entity of a policy-based charging system according to the invention.

According to another aspect, there is provided an online charging system of a policy-based charging system according to the invention.

According to another aspect, there is provided a policy and charging enforcement function entity of a policy-based charging system according to the invention.

According to a further aspect, there is provided a policy-based charging method for charging telecommunication network usage by a user in a telecommunication network architecture comprising a policy and charging enforcement function, a policy control and charging rules function and an online charging system, the policy and charging enforcement function being coupled to the policy control and charging rules function and to the online charging system, wherein the method comprises the steps of:
- associating an OCS instance at the online charging system with a user session,
- coupling directly the policy control and charging rules function to the online charging system, and
- transmitting directly information related to a policy charging status of the user from the online charging system to the policy control and charging rules function.

The transmission step may further comprise directly transmitting information related to an IP address and a port associated with the OCS instance from the online charging system to the policy control and charging rules function upon interrogation.

The policy-based charging method may further comprise provisioning information related to an IP address and a port associated with the OCS instance into a subscriber profile repository, and transmitting said information from the subscriber profile repository to the policy control and charging rules function upon interrogation.

The policy and charging enforcement function may use the IP address and the port to trigger the associated OCS instance and to transmit charging requests to said instance.

The policy-based charging method may further comprise providing the IP address and port at session establishment either by selecting an existing OCS instance handling an existing session, or by selecting another IP address and port among a pool of active OCS instances by implementing a round-robin algorithm.

The policy control and charging rules function may transmit the IP address and port associated with the OCS instance to the policy and charging enforcement function so as to be able to submit charging request towards this specific OCS instance.

At user session establishment, the policy control and charging rules function may determine a charging rule to be applied by the policy and charging enforcement function during the session, the charging rule being determined based on a policy charging information communicated by the online charging system, the policy charging information being based on the policy charging status of the user.

In real-time during the on-going user session, the online charging system may notify the policy control and charging rules function when the policy charging status of the user is modified, and the policy control and charging rules function may change the bandwidth attributed to the corresponding session.

The policy charging status of the user may be modified when a threshold associated to a consumption counter related to the user subscription is reached, and/or a threshold associated to a credit bucket related to the user subscription is reached, and/or another policy charging status at account level or subscription level is applicable.

According to still a further aspect, there is provided a computer program for a policy-based charging system, the system comprising at least a policy and charging enforcement function entity, a policy control and charging rules function entity and an online charging system entity that are coupled to each other in a telecommunication network architecture, the computer program product comprising a set of instructions that, when loaded into a program memory of and run by anyone of the entities of the policy-based charging system, causes the system to carry out the steps of the policy-based charging method of the invention.

The system and method of the invention enables a load balancing of the, e.g. Diameter, charging requests submitted to a pool of online charging system OCS instances. Thus, the invention enables a better resource allocation for managing all the session and the corresponding OCS instances during the charging processes. With the increasing data traffic and tendency of policy charging control, the load balance of the credit control and charging requests among the pool of online charging system OCS instances, enables the operator to move towards online data charging for largest segment of subscribers database without this constituting an overload for the online payment system or without necessitating any further investment on the infrastructure.

Further, the direct interface further enables policy-based charging based on user's profile, consumption and credit lifecycle/status in the online charging system OCS database for bandwidth and QoS determination not only at session establishment but also during the session via notification of the online charging system OCS to the policy control and charging rules function PCRF when user's consumption or credit reach defined thresholds in order to determine new policy rule to be applied by PCEF.

Other advantages will become apparent from the hereinafter description of the invention.

The present invention is illustrated by way of examples and not limited to the accompanying drawings, in which like references indicate similar elements:
- Figure 1 is a block diagram schematically and partially illustrating a telecommunication networks architecture for providing extended multimedia services to users of mobile radio-communication terminals;
- Figure 2 is a block diagram schematically illustrating an embodiment of the policy-based charging system and method; and
- Figure 3 is a block diagram schematically illustrating an embodiment of the policy-based charging method.

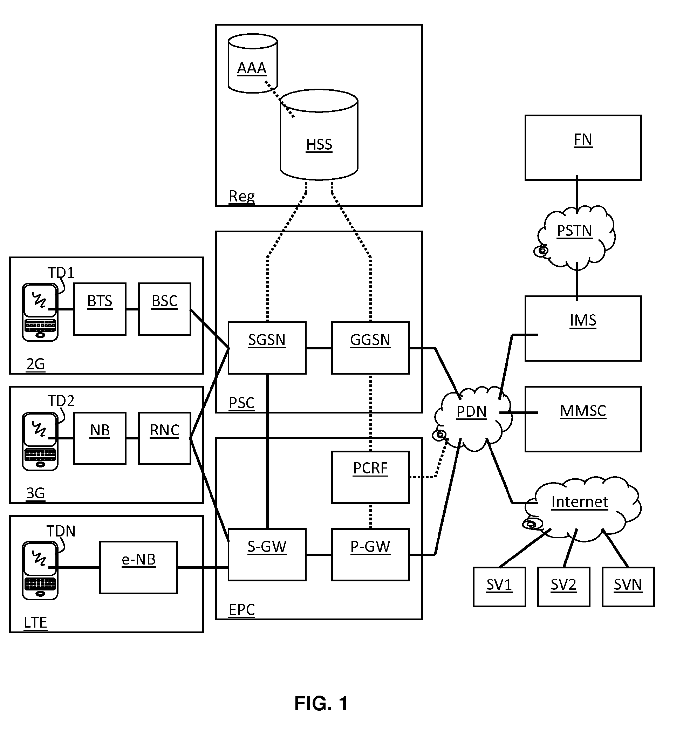

Figure 1 is a block diagram schematically and partially illustrating an example of telecommunication networks architecture with the various layers involved (from the access, transport, control, to application layers) for providing extended multimedia services to users of mobile radio-communication terminals TD1, TD2 ...TDN.

In a 2G telecommunication network, accessing to the services offered by a telecommunication operator involves a base transceiver station BTS and a base station controller BSC.

In a 3G telecommunication network, accessing to the services offered by a telecommunication operator involves a node-B referred as NB and a radio network controller RNC.

In a 4G/LTE telecommunication network, accessing to the services offered by a telecommunication operator involves an e-UTRAN (Universal Terrestrial Radio Access Network) node-B referred as e-NB.

The 2G telecommunication network interacts with the Serving GPRS (General Packet Radio Service) Support Node SGSN of the Packet Switched Core PSC. The 3G telecommunication network interacts with the SGSN of the PSC and also with the Serving Gateway S-GW of the Evolved Packet Core EPC. The 4G/LTE telecommunication network interacts with the S-GW of the EPC.

In the evolved packet core EPC, the serving gateway S-GW is coupled to the PDN (Packet Date Network) Gateway P-GW.

In the packet switched core PSC, the serving GPRS support node SGSN is coupled to the Gateway GPRS Support Node GGSN. The serving GPRS support node SGSN and the gateway GPRS support node GGSN are further coupled to register Reg comprising various databases servers, like Home Subscriber Server HSS, Admission, Authorization & Accounting AAA server.

Both, the PDN gateway P-GW and the gateway GPRS support node GGSN are coupled to the packet data network PDN. The packet data network PDN may be coupled to various source of telecommunication services, for example to servers providing services SV1, SV2 ...SVN through the Internet, or to Multimedia Message Service Center MMSC, or to IP (Internet Protocol) Multimedia Subsystem IMS. The IP multimedia subsystem IMS may be further coupled to a fixed network FN through a Public Switched Telephone Network PSTN.

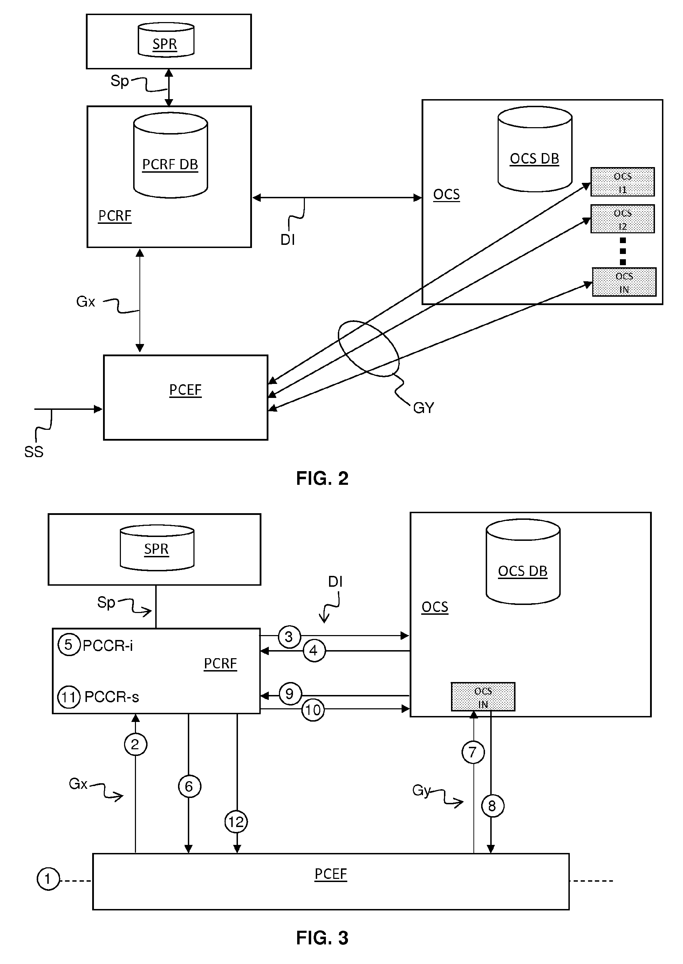

The evolved packet core EPC may further comprise and entity called the Policy Control and Charging Rules Function PCRF. The PCRF may interact with the PDN gateway P-GW and the gateway GPRS support node GGSN. The operation of the PCRF according to the invention will be explained in details with relationship to Figures 2 and 3.

When a user of a mobile radio-communication terminal TD1, TD2 or TDN uses the resources and services offered by the telecommunication networks operators, he may have various activities like a user to user communication (e.g. a single call, a data communication session, a short message), or a user to network communication (e.g. service profile administration), or an inter-network communication (e.g. transferring calls, signaling, or short messages), or a mobility (e.g. roaming or inter-system handover), etc... Each of these activities corresponding to resource usage may form a chargeable event that the involved telecommunication network(s) operator(s) want(s) to charge for. A charged party is a user involved in a chargeable event that has to pay parts or the whole charges of the chargeable event, or a third party paying the charges caused by one or all users involved in the chargeable event, or even a network operator.

Figures 2 and 3 are block diagrams schematically illustrating an embodiment of the policy-based charging system and method. The charging system and method implements a charging mechanism, namely a function whereby information related to a chargeable event is collected, formatted, transferred and evaluated in order to make it possible to determine usage for which the charged party may be billed (in particular in case of offline charging) or the subscriber's account balance may be debited (in particular in case of online charging).

The offline charging mechanism is a mechanism where the resource usage and the corresponding chargeable event(s) is(are) reported from the network to a billing domain after the resource usage has occurred. Thus, this charging mechanism does not affect, in real-time, the service rendered.

The online charging mechanism is a mechanism where chargeable event(s) is(are) collected concurrently with the resource usage. Further, authorization for the network resource usage is obtained prior to the actual resource usage to occur. Thus, this charging mechanism affects, in real-time, the service rendered.

The policy-based charging system comprises a Policy and Charging Enforcement Function PCEF, the policy control and charging rules function PCRF (shown on Figure 1) and an Online Charging System OCS.

The online charging system OCS is the entity performing the online charging mechanism namely the real-time credit control, transaction handling, rating, online correlation and management of subscriber accounts/balances. Such information related to the subscriber is stored in at least one online charging system database OCS DB.

The policy control and charging rules function PCRF is a functional element that encompasses policy control decision and flow based charging control functionalities. It determines, in real-time, policy and charging rules. The policy and charging rule function PCRF may be a software component comprising set of instructions run by a processor of a server operating in the evolved packet core EPC (see Figure 1). The policy and charging rule function PCRF may have an access to various databases PCRF DB related to the user subscription, and also to the subscriber profile repository SPR.

The policy and charging enforcement function PCEF is the functional element that encompasses policy enforcement and flow based charging functionalities. The policy and charging enforcement function PCEF is implemented either by the gateway GPRS support node GGSN (in 3G networks) or the PDN gateway P-GW (in 4G networks). The policy and charging enforcement function PCEF interacts with the policy and charging rule function PCRF through a Gx interface, and with the online charging system OCS through a Gy interface. After a user session SS has been established, the policy and charging enforcement function PCEF reports usage information to the online charging system OCS for online charging based on the information provided by the policy control and charging rules function PCRF.

According to the invention, a direct interface DI is also provided between the online charging system OCS and the policy control and charging rules function PCRF. The direct interface should be both client and server at both OCS and PCRF sides because of interactions occurring in both way at session establishment and then during on-going session as explained hereinafter. This direct interface can be implemented using Simple Object Access Protocol (SOAP) (Extensible Markup Language [XML]/Hypertext Transfer Protocol [HTTP]) or the Diameter protocol.

The Diameter-based interface may use extended "check balance" Diameter request at session establishment with extended subscriber-information grouped Attribute Value Pairs AVPs to transmit information about policy charging status of the subscriber. The information could be an associated data subscription consumption level or status in counter or associated data subscription credit level or status in bundles versus predefined thresholds. The Diameter-based interface has better performance than the SOAP-based interface, while SOAP-based interface is easier to develop than the Diameter-based interface. With this direct interface, the online charging system OCS may be client and server depending on the interaction with the other entities.

The online charging system OCS is interrogated by the policy control and charging rules function PCRF at session establishment to further enhance the policy rules (contained in the PCRF DB) with subscriber policy charging status calculated based on subscriber's profile especially subscription states and associated data subscription consumption level in counter or associated data subscription credit level in bundles versus predefined thresholds (contained in the OCS DB). Also, the online charging system OCS notifies the policy control and charging rules function PCRF during the session, when usage or credit thresholds are reached or the subscriber profile or subscription status is modified. For example, an account state may change because of inactivity or a given subscription is suspended or activated, etc...

For scalability and in order to increase the capacity of online charging system OCS, various active OCS instances OCS I1, OCS I2, OCS IN can be deployed and can be run in same online charging system OCS platform (i.e. in the same server or in multiple servers) or in multiple online charging system OCS platforms. These OCS instances provide scalability at network level with several actives OCS Diameter peers (i.e several active Diameter front end processors) as well as at application level with several active OCS service logic execution processors. The Diameter sessions (and sub-sessions) are handled by a specific OCS instance during the whole session in order to have a coherent session context at the application level. The clients, like the GPRS Support Node GGSN or the Packet Gateway P-GW, should establish a connection with at least two Diameter peers (primary and secondary one) and it should balance the Diameter sessions on the multiple connections. But, this static connection load balancing is not widely supported by network equipments. Also, in order to by-pass this limitation and to avoid static configuration of many OCS instances IP addresses and ports in GPRS Support Node GGSN and the Packet Gateway P-GW, the online charging system OCS transmits the OCS instance IP primary and secondary address and port to the policy control and charging rules function PCRF when the online charging system OCS answers to the subscriber's policy charging interrogation request sent by PCRF to OCS at session establishment through the direct interface between OCS and PCRF. This OCS instance IP address and port should be communicated by the policy control and charging rules function PCRF to the policy and charging enforcement function PCEF (i.e. the GPRS Support Node GGSN or the Packet Gateway P-GW) in order to be used by the PCEF to initiate the Diameter Ro/Gy connection with that OCS instance for rating and charging during the session of the user.

Further, in large deployment, many instances of the OCS systems may be created in the telecommunication network to be able to handle the load originating from the GPRS Support Node GGSN or the Packet Gateway P-GW. The policy and charging enforcement function PCEF allows the policy control and charging rules function PCRF to transmit different OCS primary and secondary servers per IP Connectivity Access Network (IP-CAN) session using a Gx interface. This allows the PCRF and OCS to implement load sharing algorithm based on exchanged information through the direct interface.

More precisely, a primary IP address / port and a secondary IP address / port is attributed by the online charging system OCS to each of the current OCS instances. These IP addresses / ports are transmitted by the online charging system OCS to the policy control and charging rules function PCRF at session establishment through the direct interface. Further, these IP addresses / ports of all the on-going OCS instances will be used by the policy and charging enforcement function PCEF to submit Diameter charging request and to allow Diameter load balancing by a round robin way among the multiple OCS instances (pool of OCS instances). This is resulting in an efficient way to indicate to which OCS instances the charging requests should be submitted. Further, the policy control and charging rules function PCRF will proxy it to the policy and charging enforcement function PCEF when answering any request related to PCC-rule to apply for the concerned user's session. The policy and charging enforcement function PCEF will use the associated IP address / port to trigger the corresponding OCS instance. This will allows load balancing of the Diameter charging requests submitted by the policy and charging enforcement function PCEF towards the pool of actives OCS instances.

Alternatively, the OCS instance at the online charging system OCS may be statically associated with users' sessions and provisioned in the subscriber profile repository SPR. As, the policy control and charging rules function PCRF is coupled to the subscriber profile repository SPR through the Sp interface, the policy control and charging rules function PCRF may be able to get the IP addresses and ports associated with the OCS instances at session establishment by interrogating the subscriber profile repository SPR.

Figure 3 schematically illustrates the different steps of the policy-based charging method.

In a first step 1, a user session is established.

At session establishment, the policy and charging enforcement function PCEF contacts the policy control and charging rules function PCRF which in turn interrogates the online charging system OCS. Further, at each session establishment when the PCRF interrogates the OCS, the address of the PCRF is memorized by the OCS because there may be several couples of PCEF/PCRF in the network in the session context.

In a second step 2, the policy and charging enforcement function PCEF requests for decision regarding the PCC-Rule to the policy control and charging rules function PCRF. The PCC-Rule relates to a set of information enabling the detection of a service data flow and providing parameters for policy control and/or charging control.

In a third step 3, the policy control and charging rules function PCRF asks the online charging system OCS about subscriber policy charging information. A subscriber information request is sent through the direct interface from the PCRF to the OCS.

In a fourth step 4, the online charging system OCS answers to the policy control and charging rules function PCRF regarding the subscriber policy charging information. A subscriber information answer is sent through the direct interface from the OCS to the PCRF.

In the third 3 and fourth step 4, the policy control and charging rules function PCRF is the client and the online charging system OCS is the server. The PCRF interrogates the OCS for subscriber information that may for example include:
- a session establishment authorization: should the PCRF authorize the session establishment based on a verification made by the OCS that the user's associated data bundles/counters is under defined thresholds?
- an OCS IP address/port: what primary IP address/port and secondary IP address/port of the current OCS instance OCS IN should the PCRF communicate to the PCEF for this user and this session?
- a subscription identifier.
- either a policy charging status related to a credit level in the bundle/bucket associated with the subscription for which the user has subscribed versus predefined thresholds: for example a policy-charging-status-1 if the credit level is between 0 and a first predefined threshold, a policy-charging-status-2 if the credit level is between the first predefined threshold and a second predefined threshold, a policy-charging-status-3 if the credit level is beyond the second predefined threshold, etc...
- and/or a policy charging status related to a consumption level in the counter associated with the data subscription versus predefined thresholds: for example a policy-charging-status-1 if the consumption level is between 0 and a first predefined threshold, a policy-charging-status-2 if the consumption level is between the first predefined threshold and a second predefined threshold, a policy-charging-status-3 if the consumption level is beyond the second predefined threshold, etc...
- and/or another policy charging status that can be defined at an account level for all the data subscriptions.
- and/or another policy charging status that can be related to user, service and network like a network area indicator load. Different policy charging status can be defined according to the network load indicator status versus predefined thresholds. This allows applying different PCC-Rule and then different tariff, different bandwidth and QoS according to network zone where user is located and according to network load in this zone.

In a fifth step 5, an initial PCC-Rule PCCR-i is determined by the policy control and charging rules function PCRF based on the subscriber information answer. The policy control and charging rules function PCRF may further takes into account the subscriber information contained in the Subscription Profile Repository SPR. The policy control and charging rules function PCRF may further interacts with the Subscription Profile Repository SPR through a Sp interface. The Sp interface allows the PCRF to request subscription information related to the IP-CAN (Internet Protocol Connectivity Access Network) transport level policies from the SPR based on a subscriber ID (e.g. the subscriber ID can be the IMSI namely the International Mobile Subscriber Identity), a packet data network PDN identifier and possible further IP-CAN session attributes. The subscription profile repository SPR is an equivalent of the Home Subscriber Server HSS (in IMS) or the Home Location Register HLR (in 2G/3G networks).

For example, the subscription profile repository SPR may comprise the following information related to the user subscriptions:
- Higher fees for higher QoS/bandwidth: 20 Euros Bronze, 40 Euros Silver, or 60 Euros Gold /5 GB monthly plans with associated maximum bandwidth;
- Plans with allocated QoS/bandwidth depending on time/calendar days: flat-rate plan offering the lowest QoS during business hours, but offers higher QoS after business hours;
- Restrictive QoS/bandwidth in unlimited plans to prioritize higher monetized packet flows: 20 Euros monthly fee to have unlimited data access during off-peak hours (00:00 am to 06:00 am) with a given restrictive QoS/bandwidth;
- Downgrade QoS/bandwidth according to monthly usage threshold (volume): "Fair usage" or "soft caps" model: 20 Euros for 5 GB monthly plans with associated maximum bandwidth, then downgrade QoS/bandwidth until next period.

In a sixth step 6, based on the initial PCC-Rule determination, a PCC-Rule enforcement information is sent by the policy control and charging rules function PCRF to the policy and charging enforcement function PCEF.

Then, during the ongoing session, in a seventh step 7, the policy and charging enforcement function PCEF submits towards the online charging system OCS the credit control requests. A credit control request is sent through the Gy interface from the PCEF to the OCS. The policy and charging enforcement function PCEF uses the IP address / port of the concerned OCS instance to transmit the credit control request.

In a eighth step 8, the online charging system OCS answers to the policy and charging enforcement function PCEF regarding the subscriber information. A credit control answer is sent through the Gy interface from the OCS to the PCEF.

In a ninth step 9, the online charging system OCS notifies the policy control and charging rules function PCRF when threshold are reached based on the credit control performed during the seventh 7 and eighth 8 steps.

Optionally, in a tenth step 10, the policy control and charging rules function PCRF may notify acknowledgement of the reached threshold notification to the online charging system OCS.

During the ninth step and tenth step, the PCRF is the server and the OCS is the client. This interaction enables the OCS to notify the PCRF when user's credit level, consumption level, top-up level (namely increasing the monthly maximum level), subscription states change have reached defined threshold during the on-going session. When user's policy charging status is modified or when any counter comprised in the user data bundle reaches the defined thresholds, then the OCS notifies the PCRF about the reached/crossed threshold to update the bandwidth by providing the name identifying bundle and the name identifying threshold. There may be several defined thresholds per bundle/counter, for example threshold 80%, threshold 50%, thresholds 3%, etc... As a consequence, the PCRF updates/modifies the PCEF authorized quality of service QoS offered to the user during the on-going session. For example, the PCRF may cut-off, slowdown, speed up, etc... the attributed QoS/bandwidth. Further, the user may be notified of the crossed thresholds, and eventually invited for his instruction to continue the session, end the session, perform a top-up or a bundle purchase, etc... Thus, the network operator can control network resources and monetize network infrastructure investment by offering tailored services with variable QoS to its subscribers. The network operator can control the network bandwidth capacity to ensure that policy-driven prioritization, high-value packet flows are not impacted by congestion. The network operator can also get additional revenue by evolving service offerings with personalized and self-service options and bundles with QoS that drives higher tariffs. The network operator can finally stimulate new subscriptions with "try-and-buy" services with high QoS for a limited period of time.

In an eleventh step 11, a subsequent PCC-Rule PCCR-s is determined by the policy control and charging rules function PCRF based on the reached threshold notification of the ninth step 9.

In a twelfth step 12, based on the subsequent PCC-Rule determination, a subsequent, yet actualized, PCC-Rule enforcement information is sent by the policy control and charging rules function PCRF to the policy and charging enforcement function PCEF.

Thus, the real-time interaction between the online charging system OCS, the policy control and charging rules function PCRF and the policy and charging enforcement function PCEF at session establishment as well as during the session enables dynamic policy-based charging. More precisely, it is possible to control the network resources in real time, and to adapt and modify resource allocation to the state of the subscriber's credit and consumption in conjunction with their charging profiles and service entitlements.

For example, the policy-based charging may be dynamically changed in the following way:
- QoS throttling based on usage thresholds: flat rate for 5 GB monthly usage at 500 kb/s, then prepaid rate/MB with guaranteed 250 kb/s;
- QoS upgrade as bonus for limited period: cross service promotion: "QoS grant" as a bonus for 2 hours voice usage for the period, or "QoS grant" as a bonus for 50 Euros spent in the period;
- On-demand QoS/bandwidth (QoS booster): user activates a purchase for a QoS/bandwidth booster;
- "Try-and-buy" stimulation: give a subscription for free with high QoS/bandwidth for a limited time, or give upgraded QoS/bandwidth on the user's birthday or any user criteria (usage counters, loyalty points);
- Zoning policy-based charging according to network load: bandwidth manipulation according to cell identification load indicator or location area network load indicator thresholds to vary tariff and QoS according to the load indicator versus predefined threshold for network load in a given zone, or home zone/office zone policy-based charging (subscription with guaranteed tariff and QoS when a data session is initiated from a home zone/office zone, but a different tariff and QoS for an out of zone session);
- Unlimited subscription policy-based charging to avoid OCS load: PCRF zero-rated policy plan for unlimited subscription (SMS, MMS, URLs, free tolls) can be defined to instruct the PCEF to allow the session without triggering the online charging system OCS as it corresponds to unlimited subscription, thus avoiding OCS overload for session related to unlimited subscriptions.

Typically, such action may be typically proposed to the user throughout the established session, when subscriber's thresholds are reached, and the online charging system OCS notifies the policy control and charging rules function PCRF to determine and trigger the subsequent PCC rule to apply. This action requires user interaction (not shown on Figure 3) and up sell opportunities for the telecommunication network operator.

Then, the steps 7 to 12 are repeated during the ongoing session until the end of the session.

The system and method of the invention enable implementing online charging mechanisms by performing real-time monitoring of resource usage in order to detect the relevant chargeable events occurring at the bearer level (e.g. EPC), at the subsystem level (e.g. IMS), and at the service level (e.g. MMS).

The system and method of the invention enable taking into account in addition to network parameters, subscriber's profile, credit level, consumption level, top-up level, account lifecycle and its subscriptions lifecycle and parameters in the management of policy-based charging at session establishment and during on-going session via OCS notification.

The system and method of the invention also provide the flexibility of adjusting the charging with respect to the quality of service offered all along a session.

The system and method of the invention support the application of new rules and then automatically make policy decisions for each subscriber active on the network.

The direct interface does not require any PCEF/GGSN/P-GW upgrade, neither at the Home Public Land Mobile Network HMPLN nor at the Visited Public Land Mobile Network VPLMN.

The drawings and their description hereinbefore illustrate rather than limit the invention.

Although a drawing shows different functional entities (e.g. OCS, PCEF, PCRF) as different blocks, this by no means excludes implementations in which a single entity carries out several functions, or in which several entities carry out a single function. In this respect, the drawings are very diagrammatic. The functions of the various elements shown in the Figures, including any functional blocks, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "entity" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

It should be appreciated by those skilled in the art that any block diagrams herein represent conceptual views of illustrative circuitry embodying the principles of the invention.

The use of the term "real-time" should also encompass the notion of "near real-time": real time meaning that, for example, a charging and billing information is to be generated, processed, and transported to a desired conclusion in less than 1 second, while near real-time meaning that, for example, a charging and billing information is to be generated, processed, and transported to a desired conclusion in less than 1 minute.

Any reference sign in a claim should not be construed as limiting the claim. The word "comprising" does not exclude the presence of other elements than those listed in a claim. The word "a" or "an" preceding an element does not exclude the presence of a plurality of such element.

## Claims

1. A policy-based charging system for charging telecommunication network usage by a user in a telecommunication network architecture comprising a policy and charging enforcement function (PCEF) entity, a policy control and charging rules function (PCRF) entity and an online charging system (OCS), the policy and charging enforcement function (PCEF) entity being coupled to the policy control and charging rules function (PCRF) entity and to the online charging system (OCS), wherein an instance (OCS IN) at the online charging system (OCS) is associated with a user session (SS), and wherein the policy control and charging rules function (PCRF) entity is coupled to the online charging system (OCS) through a direct interface (DI), the direct interface being adapted to transmit information related to a user subscription from the online charging system (OCS) to the policy control and charging rules function (PCRF) entity.

2. The policy-based charging system of claim 1, wherein the direct interface is a Diameter protocol based interface or a SOAP protocol based interface.

3. A policy control and charging rules function (PCRF) entity of a policy-based charging system according to anyone of the claims 1 to 2.

4. An online charging system (OCS) of a policy-based charging system according to anyone of the claims 1 to 2.

5. A policy and charging enforcement function (PCEF) entity of a policy-based charging system according to anyone of the claims 1 to 2.

6. A policy-based charging method for charging telecommunication network usage by a user in a telecommunication network architecture comprising a policy and charging enforcement function (PCEF), a policy control and charging rules function (PCRF) and an online charging system (OCS), the policy and charging enforcement function (PCEF) being coupled to the policy control and charging rules function (PCRF) and to the online charging system (OCS), wherein the method comprises the steps of:
- associating an OCS instance (OCS IN) at the online charging system (OCS) with a user session (SS),
- coupling directly the policy control and charging rules function (PCRF) to the online charging system (OCS), and
- transmitting directly information related to a policy charging status of the user from the online charging system (OCS) to the policy control and charging rules function (PCRF).

7. The policy-based charging method of claim 6, wherein the transmission step further comprises directly transmitting information related to an IP address and a port associated with the OCS instance from the online charging system (OCS) to the policy control and charging rules function (PCRF) upon interrogation.

8. The policy-based charging method of claim 6, further comprising provisioning information related to an IP address and a port associated with the OCS instance into a subscriber profile repository (SPR), and transmitting said information from the subscriber profile repository (SPR) to the policy control and charging rules function (PCRF) upon interrogation.

9. The policy-based charging method according to anyone of the claims 6 to 8, wherein the policy and charging enforcement function (PCEF) uses the IP address and the port to trigger the associated OCS instance and to transmit charging requests to said OCS instance.

10. The policy-based charging method according to anyone of the claims 6 to 9, wherein it further comprises providing the IP address and port at session establishment either by selecting an existing OCS instance handling an existing session, or by selecting another IP address and port among a pool of active OCS instances by implementing a round-robin algorithm.

11. The policy-based charging method according to anyone of the claims 6 to 10, wherein the policy control and charging rules function (PCRF) transmits the IP address and port associated with the OCS instance to the policy and charging enforcement function (PCEF) so as to be able to submit charging request towards this specific OCS instance.

12. The policy-based charging method according to anyone of the claims 6 to 11, wherein at user session establishment, the policy control and charging rules function (PCRF) determines a charging rule (PCCR) to be applied by the policy and charging enforcement function (PCEF) during the session, the charging rule (PCCR) being determined based on a policy charging information communicated by the online charging system (OCS), the policy charging information being based on the policy charging status of the user.

13. The policy-based charging method according to anyone of the claims 6 to 12, wherein in real-time during the on-going user session:
- the online charging system (OCS) notifies the policy control and charging rules function (PCRF) when the policy charging status of the user is modified, and
- the policy control and charging rules function (PCRF) changes the bandwidth attributed to the corresponding session.

14. The policy-based charging method of claim 13, wherein the policy charging status of the user is modified when a threshold associated to a consumption counter related to the user subscription is reached, and/or a threshold associated to a credit bucket related to the user subscription is reached, and/or another policy charging status at account level or subscription level is applicable.

15. A computer program for a policy-based charging system, the system comprising at least a policy and charging enforcement function (PCEF) entity, a policy control and charging rules function (PCRF) entity and an online charging system (OCS) entity that are coupled to each other in a telecommunication network architecture, the computer program product comprising a set of instructions that, when loaded into a program memory of and run by anyone of the entities of the policy-based charging system, causes the system to carry out the steps of the policy-based charging method according to anyone of the claims 6 to 14.
